# EUROPEAN PATENT APPLICATION

(11) **EP 2 887 340 A1**
(43) Date of publication of application: **24.06.2015**
(21) Application number: 14178130.2
(22) Date of filing: 23.07.2014
(51) Int. Cl.: G09B 9/00

(54) **Method of playing operation records of energy management system**

(30) Priority: 20.12.2013 KR 20130160674
(71) Applicant: LSIS Co., Ltd., Anyang-si, Gyeonggi-do 431-848 (KR)
(72) Inventor: Lee, Seung Ju, 431-848 Anyang-si, Gyeonggi-do (KR); Yoon, Yeo Chang, 431-848 Anyang-si, Gyeonggi-do (KR); Lee, Myung Hwan, 431-848 Anyang-si, Gyeonggi-do (KR); Kong, Shin Jo, 431-848 Anyang-si, Gyeonggi-do (KR); Park, Jong Ho, 431-848 Anyang-si, Gyeonggi-do (KR)
(74) Representative: Lang, Johannes

(57) **Abstract**

A method of playing an operation record of an energy management system (EMS) is provided. The method includes setting a play section; acquiring operation record data corresponding to a set play section; playing acquired operation record data; determining whether an additional event occurs during the playing of the operation record data; checking an execution file corresponding to the additional event when it is determined that the additional event occurs; and playing a checked execution file along with the operation record data.

## Description

### BACKGROUND

The present disclosure relates to an energy management system, and more particularly, to a method of playing the operation records of an energy management system.

With the growth of national economy and the improvement of the standard of living of people, the consumption of power enabling convenient life and being the base of the growth of national economy continues to increases and such an increase in power consumption makes a power system complex, diversified and voluminous. However, large-scale blackout that has occurred in North America and Europe, 2003 results from weakness in data acquisition and supervisory control over a power system. At that time, an initial small-scale accident has not been rapidly sensed and not been rapidly processed, and thus has been spread to all power systems. Accordingly, the importance of simulation training related to a dispatcher that is responsible for the operation of a power system in an energy management system is being magnified.

Systematic development has not been performed on a dispatcher training simulation system and simply, only a simulation training system limited to a minor part such as a simulation system for the analysis of a power system or an operator training system (OTS) for simulation training for a supervisory control and data acquisition (SCADA) operator is being utilized and a development in a training simulation system for a dispatcher that is responsible for the operation of a power system related to the overall energy management system (EMS) is unsatisfactory.

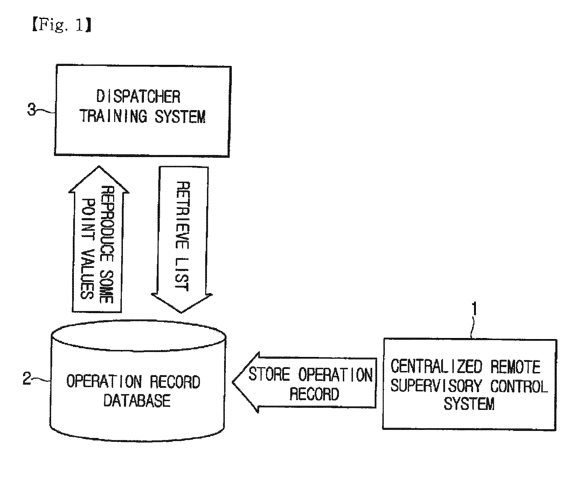

Fig. 1 is a diagram for explaining an EMS for training a dispatcher according to the related art.

Referring to Fig. 1, the EMS for training the dispatcher includes various power system facilities such as a centralized remote monitoring control system 1 acquiring information on the states of a generator, a substation and a circuit breaker (hereinafter, referred to as "operation record data"), an operation record database 2 storing operation record data acquired through the centralized remote monitoring control system 1, and a dispatcher training system 3 that selects data to be played by a dispatcher among the operation record data stored in the operation record database 2 and plays selected data.

The centralized remote monitoring control system 1 checks the states of various power system facilities, acquires the operation record data on checked states and stores acquired data in the operation record database 2.

In this case, the centralized remote monitoring control system 1 stores the operation record data in the operation record database 2 or stores, specific point information on a section where an accident occurs, in the operation record database 2 when the accident occurs.

The dispatcher training system 3 retrieves the operation record data on a minute basis or on an hour basis from the operation record database 2, extracts data on some point values according to found data, and plays extracted data.

The above-described related art simply stores the operation record data, selects and then plays the operation record data from stored data, and checks the change of the operation record data.

Accordingly, when an accident occurs or any condition designated by a dispatcher is satisfied, the related art is difficult to use the function of storing data being currently played in order to check a point value before the accident, a point value at the time of the accident, and a point value after the accident and there is a limitation in that it is difficult to check other multimedia data (such as a single line diagram of a specific region) while the operation record data is played.

### SUMMARY

Embodiments provide a function of stopping playing operation record data being currently played when an accident occurs or an event satisfying a pre-designated condition occurs, during the playing of the operation record data.

Embodiments also provide data corresponding to a multimedia play condition together even during the playing of operation record data selected from a dispatcher by setting the multimedia play condition.

In one embodiment, a method of playing an operation record of an energy management system (EMS) includes setting a play section; acquiring operation record data corresponding to a set play section; playing acquired operation record data; determining whether an additional event occurs during the playing of the operation record data; checking an execution file corresponding to the additional event when it is determined that the additional event occurs; and playing a checked execution file along with the operation record data.

The method may further include setting an additional event to occur during the playing of the operation record data, wherein the setting of the additional event includes: designating the occurrence time of an additional event and setting an execution time to be executed at a designated occurrence time.

The additional event may be an event providing a notice that an alarm rings, and

the execution file may include a notice screen for providing a notice that the alarm rings.

The additional event may be an event providing a notice of information on the shift of a dispatcher, and the execution file may include a text file that includes details to be exchanged when the shift of the dispatcher is performed.

The additional event may be an event providing a notice of weather information on a specific region, and the execution file may include a video file for providing a notice of the weather information on the specific region.

The additional event may be an event for displaying a single line diagram screen of a specific region, and the execution file may include a single line diagram file for displaying a single line diagram screen of the specific region.

The method may further inlcude temporarily stopping playing the operation record data when an accident event occurs during the playing of the operation record data.

The method may further include displaying information on the accident event when the playing of the operation recording data is temporarily stopped.

In an embodiment, it is possible for a dispatcher to quickly check a corresponding accident section by stopping the play operation of operation record data being currently played when an accident occurs or a preset any condition is satisfied.

Also, in an embodiment, it is possible to accurately analyze the reasons for the accident and provide realistic training by providing data corresponding to a corresponding event in addition to playing operation record data when any condition set by a dispatcher is satisfied.

The details of one or more embodiments are set forth in the accompanying drawings and the description below. Other features will be apparent from the description and drawings, and from the claims.

### BRIEF DESCRIPTION OF THE DRAWINGS

Fig. 1 is a diagram for explaining an energy management system (EMS) for training a dispatcher according to the related art.
Fig. 2 represents an EMS according to an embodiment.
Fig. 3 represents a detailed configuration of a dispatcher training system 130 shown in Fig. 2.
Fig. 4 is a flow chart for explaining, step by step, a method of setting an event according to an embodiment.
Figs. 5 to 10 are diagrams for explaining, in more detail, the process of setting an event shown in Fig. 4.
Fig. 11 is a flow chart for explaining, step by step, a method of playing the operation record of an EMS according to an embodiment.

### DETAILED DESCRIPTION OF THE EMBODIMENTS

The effects and features of an embodiment, and implementation methods thereof will be clarified through following embodiments described with reference to the accompanying drawings. An embodiment may, however, be embodied in different forms and should not be construed as limited to the embodiments set forth herein. Rather, these embodiments are provided to make this disclosure thorough and complete and fully convey the scope of an embodiment to a person skilled in the art. Further, the present invention is only defined by scopes of claims. The same reference numerals throughout the disclosure refer to the same components.

When describing embodiments, detailed descriptions related to known functions or configurations will be ruled out in order not to unnecessarily obscure subject matters of the embodiments. In addition, since the terms used herein are defined in consideration of functions in the embodiments, they may vary depending on an operator intention or practice. Therefore, the definitions needs to be made based on details throughout the present invention.

Each block of the accompanying drawings and combinations of each step of a flowchart may also be performed by computer program instructions. Since the computer program instructions may be loaded on the processor of a general-purpose computer, a special-purpose computer or other programmable data processing equipment, the instructions performed by the processor of the computer or other programmable data processing equipment create means that performs functions described on each block of a drawing or each step of a flowchart. Since the computer program instructions may also be stored in a computer usable or computer readable memory that may aim at the computer or other programmable data processing equipment in order to implement functions in a specific manner, the instructions stored in the computer usable or computer readable memory may also produce an item that includes an instruction means performing functions described on each block of a drawing or each step of a flowchart. The computer program instructions may also be loaded on the computer or other programmable data processing equipment. Thus, since a series of operation steps are performed on the computer or other programmable data processing equipment to create processes executed by a computer, instructions operating the computer or other programmable data processing equipment may also provide steps for performing functions described on each block of a drawing and each step of a flowchart.

Also, each block or each step may represent a portion of a module, a segment or a code that includes one or more executable instructions for performing specific logical function(s). Also, it should be noted that some alternative embodiments may be performed in such a way that functions mentioned at blocks or steps are performed in a different order. For example, two blocks or steps shown one after another may also be performed substantially at the same time or the blocks or steps may also be sometimes performed in a reverse order according to a corresponding function.

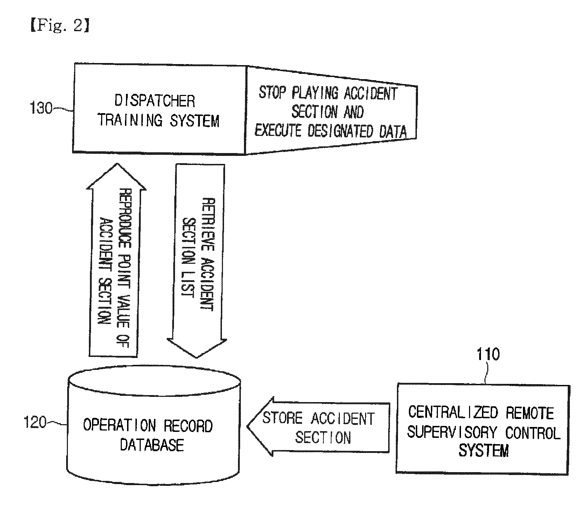

Fig. 2 represents an energy management system (EMS) according to an embodiment.

Referring to Fig. 2, the EMS includes a centralized remote monitoring control system 110, an operation record database 120 and a dispatcher training system 130.

One of main characteristics of such a system is receiving and utilizing an obtained, stored and managed database related to a power system for the EMS to be able to perform dispatcher training simulation under the same environment as a real power system.

The centralized remote supervisory control system 110 may be called supervisory control and data acquisition SCADA and performs the supervisory control function of a SCADA system that is also called a supervisory control data collection system.

The centralized remote supervisory control system 110 is a system that uses an analog signal or digital signal on a communication path to collect state information data on a remote device with a remote terminal unit, receives, records and displays the data so that a central control system performs supervisory control on the remote device.

That is, the centralized remote supervisory control system 110 is a system that performs centralized supervisory control on various types of remote facilities such as a generation facility, a power transmission and distribution facility, petrochemistry plant, an iron-making factory facility, and a factory automation facility.

The centralized remote supervisory control system 110 performs an alarming operation that is a function of a supervisory system performs a pre-defined operation according to an alarm state of a remote device, a supervisory control operation for selectively operating a remote external device manually, automatically or both manually and automatically, the indication and display operations of a supervisory system for receiving, displaying/ recording state information on a remote device, and an operation for enabling digital pulse information to be received, summed and used for display and recording.

The centralized remote supervisory control system 110 stores operation record data on various facilities in the operation record database 120.

In this case, the centralized remote supervisory control system 110 stores, a point value for a section where an accident occurs, in the operation record database 120, when the accident occurs while a storing operation for operation record data is performed.

In this case, the point value includes a point value before the accident occurs, a point value when the accident occurs, and a point value after the accident occurs.

The operation record database 120 stores operation record data provided from the centralized remote supervisory control system 110.

That is, for the real-time supervision and control on a power system, the operation record database 120 stores real-time data that represents the current states of a power system, such as remote measurements transmitted from the remote terminal unit (RTU) or real-time construction control (RCC) of each generator or substation and the centralized remote supervisory control system 110.

Also, the operation record database 120 may store programs that support power system facility modeling or power system connection relationship modeling for supporting the system application program or generator control operation program of the EMS, and may store data on power system supervision and control collected and transmitted from the EMS.

When the facilities have accidents, the operation record database 120 may store a point value before the accident, a point value at the time of the accident, and a point value after the accident.

The dispatcher training system 130 utilizes data stored in the operation record database 120 to perform dispatcher training simulation under the same environment as a real power system.

In this case, when an event satisfying a preset condition occurs while simulation is performed by using data stored in the operation record database 120, the dispatcher training system 130 enables preset data corresponding to the event to be display.

That is, when an event corresponding to a preset condition occurs while training simulation is performed by using operation record data on an accident section, the dispatcher training system 130 displays data corresponding to the event to be able to check the current states of the facilities in addition to performing the training simulation.

In this example, the displayed data may include various types of data depending on the situation.

For example, when dispatcher training simulation is performed on the assumption that alarm rings at 10 AM, the displayed data may be an alarm screen that provides a notice that it is 10 AM while the operation record data is played.

When the shit of a dispatcher is otherwise set to eleven o'clock, the data may be a text file that provides a notice of details to be exchanged at the shift of the dispatcher.

Also, when data providing a notice of weather information on a corresponding region is otherwise stored, the data may be video data on stored weather information.

As above, when an event corresponding to any condition designated by a dispatcher occurs even while the operation record data is played, the dispatcher training system 130 according to an embodiment displays data corresponding to the event along with the operation record data.

Also, when a specific facility has an accident while training simulation is performed by using the operation record data, the dispatcher training system 130 temporarily stops playing operation history data being currently display.

Also, the dispatcher training system 130 may display point values for the accident to so that a dispatcher may easily check details on the accident.

In addition, when all the details on the accident section are checked, the dispatcher training system 130 re-plays the operation history data temporarily-stopped to enable the operation history data to be continuously checked.

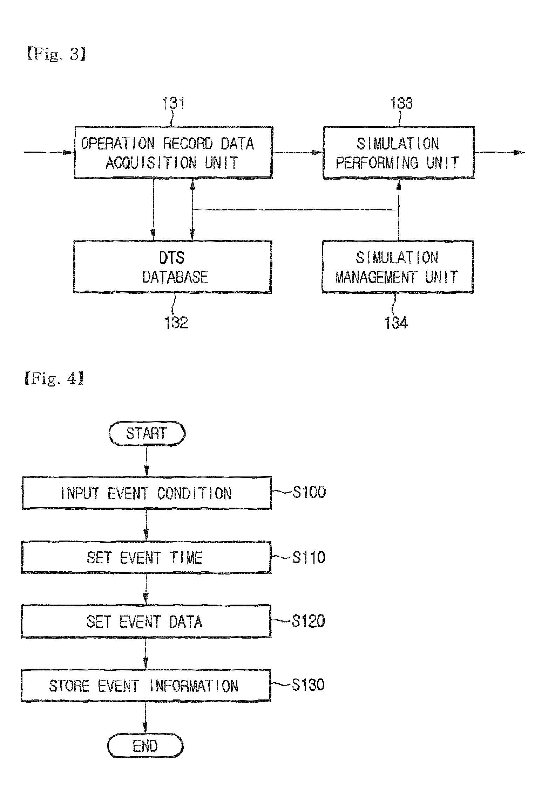

Fig. 3 represents a detailed configuration of the dispatcher training system 130 shown in Fig. 2.

Referring to Fig. 3, the dispatcher training system 130 includes an operation history data acquisition unit 131, a DTS database 132, a simulation performing unit 133, and a simulation management unit 134.

The operation record data acquisition unit 131 acquires data necessary for simulation from the operation history database 120.

In particular, the operation history data acquisition unit 131 connects to the operation history database 120 under the control of the simulation management unit to be described below, and acquires operation history data corresponding to a preset retrieval condition from the operation record database 120.

The DTS database 132 stores operation record data acquired from the operation record database 120 through the operation history data acquisition unit 131.

Also, the DTS database 132 stores data generated while simulation is performed by using acquired operation history data.

In this example, the data generated while the simulation is performed may include result data or evaluation data on training simulation.

That is, the DTS database 132 is used for storing data generated while the training simulation is performed, and result and evaluation data on the training simulation, such as overall data generated in the training simulation process including a result of a modeling work for a power system performed by the simulation performing unit 133 to be described below, a control signal input through a dispatcher in the training simulation process, a training process and result according to the control signal, and a training evaluation result so that these data may be utilized later.

Also, the DTS database 132 stores information on any condition preset through a dispatcher.

Stored information may include various pieces of data to be checked along with simulation details while the simulation is performed.

The data may be displayed while the simulation is performed or at a preset time.

Related descriptions are provided below in more detail.

The simulation performing unit 133 plays operation history data stored in the DTS database 132 to perform training simulation.

That is, the simulation performing unit 133 is a part at which a dispatcher training simulation process is actually performed (i.e., a training simulation program is executed), and performs simulation by using acquired operation history data according to an input signal from a dispatcher (trainee) so that it is possible to verify the power system operation and control abilities and the situation control ability of a trainee and train the trainee, under the same environment as a real power system.

When a data play condition corresponding to a specific event occurs while simulation is performed by the operation record data, the simulation performing unit 133 displays data designated to correspond to the specific event along with the operation record data.

The event may be designated by setting the occurrence time of an event, an execution file, the name of an event, and the type of an event before the simulation is performed by an input signal from a dispatcher.

The simulation management unit 134 controls the overall operations of the dispatcher training system 130.

For example, the simulation management unit 134 acquires data necessary for simulation from the operation record database 120 and stores the data in the DTS database 132.

In addition, the simulation management unit 134 controls the simulation performing unit 133 to play acquired data.

Also, the simulation management unit 134 receives a signal input from a dispatcher while the simulation is performed, and controls the operation of the simulation based on a received input signal.

Also, the simulation management unit 134 controls the overall setting operation of the event when a signal for setting an event is input from the dispatcher, and stores information on a set event to the DTS database 132 when the process of setting the event is completed.

Also, when an execution condition corresponding to a previously set event is satisfied while simulation is performed through the simulation performing unit 133 based on the acquired operation record data, the simulation management unit 134 displays an execution file set to correspond to an event that satisfies the execution condition.

Also, when various facilities have accidents while the simulation is performed based on the operation record data, the simulation management unit 134 temporarily stops the simulation (in other words, the playing of the operation record data is temporarily stopped) to be able to easily check the details of the event that has occurred.

In this case, the simulation management unit 134 stops playing the operation record data and displays information on the details of the accident so that it is easy to check the details of the accident that has occurred.

In an embodiment, it is possible for a dispatcher to quickly check a corresponding accident section by stopping the playing operation of operation record data being currently played when an accident occurs or a preset any condition is satisfied.

Also, in an embodiment, it is possible to accurately analyze the reasons for the accident and provide realistic training by providing data corresponding to a corresponding event in addition to playing operation record data when any condition set by a dispatcher is satisfied.

Fig. 4 is a flow chart for explaining, step by step, a method of setting an event according to an embodiment.

Firstly, an event to be set below means an additional event, not an event set for performing general training simulation.

That is, in order to train a dispatcher, there is a need to configure a scenario necessary for simulation, in which case elements configuring the scenario are referred to as events.

For example, the scenario may include a training scenario for training for an economic power supply, an automatic generation control, a remote control, a plan for the inter-supply of electricity, load following, a voltage control, a reactive-power supply, communication with a substation/ power station operator, tidal-current calculation, optimal tidal-current calculation, various types of troubles, load shedding, communication disruption, a generator trip, a control situation for an unplanned relay operation, a recovery procedure after blackout, the system re-connection of a generator, and system analysis on recovery, and in order to configure the scenario, various events should be defined.

That is, the events mean accidents used for training and specific incidents.

Accordingly, the dispatcher training system 130 configures a scenario based on the event and performs training simulation based on operation record data corresponding to a configured scenario.

In this case, in an embodiment, an additional event may occur while the training simulation is performed, and thus a file designated to correspond to the additional event is executed along with the training simulation.

Referring to Fig. 4, firstly, the dispatcher training system 130 inputs an event condition in step S100. The event condition means an event for enabling a dispatcher to check additional data along with the training simulation, not for a scenario configured to perform the training simulation.

Then, the dispatcher training system 130 sets the occurrence time of the event as defined above in step S110. That is, the dispatcher training system 130 sets information on the occurrence time of an event that will additionally occur while training simulation is performed.

In addition, the dispatcher training system 130 designates a file to be executed at the set time in step S120. The designated file may be a general text file or an alarm screen for providing a notice of a specific situation or may otherwise be a video file for providing a notice of weather information.

Then, the dispatcher training system 130 stores information on the event as set above in step S130.

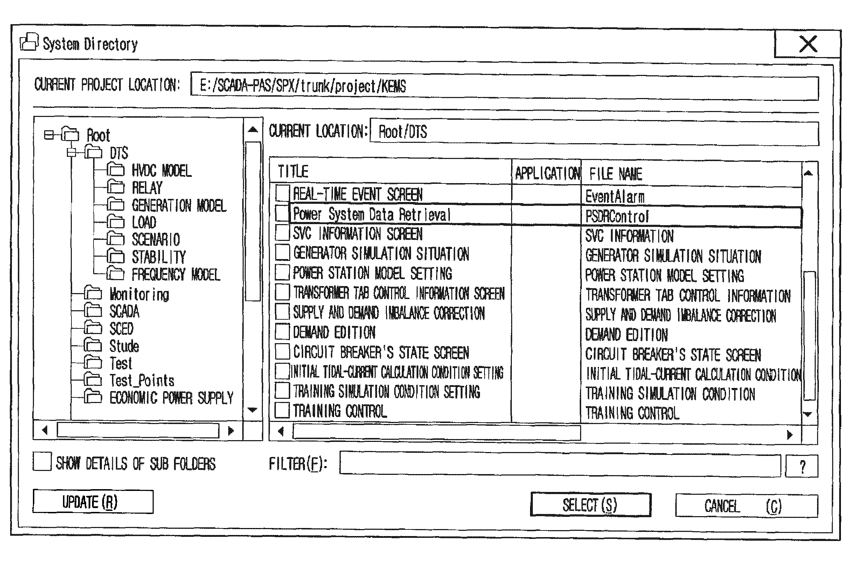

Figs. 5 to 10 are diagrams for explaining, in more detail, the process of setting an event shown in Fig. 4.

Referring to Fig. 5, in order to first perform training simulation, a file for setting a scenario is executed.

In this case, in order to execute the file, it is possible to first execute a viewport, and after the execution of the viewport, [DTS/PSDRControl.ivd] is selected to execute a PSDR control file.

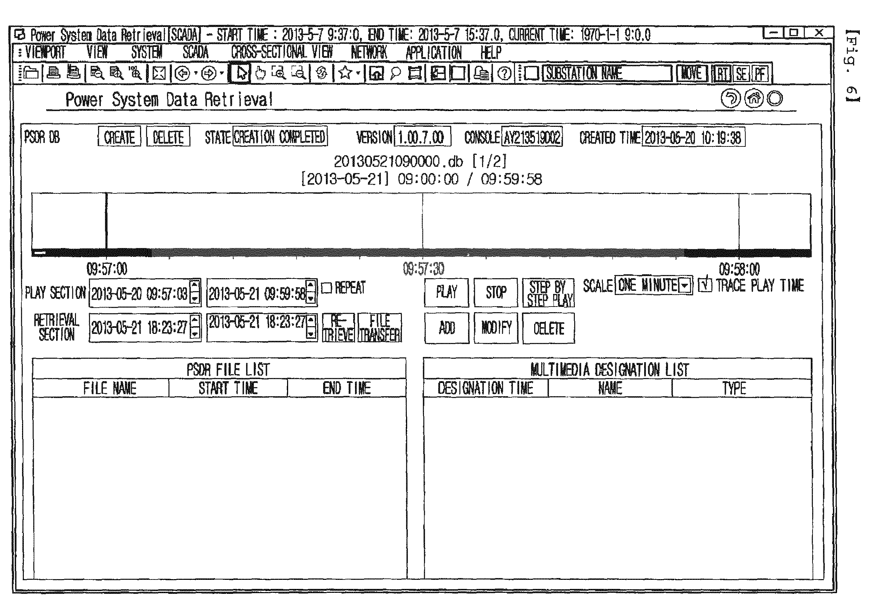

When the file is executed, a training screen is displayed as shown in Fig. 6.

The training screen includes a play section item and a retrieval section item. The play section item is an item for configuring a scenario according to which training simulation is performed, and the retrieval section item is an item for retrieving a specific execution file to set the scenario or an additional event.

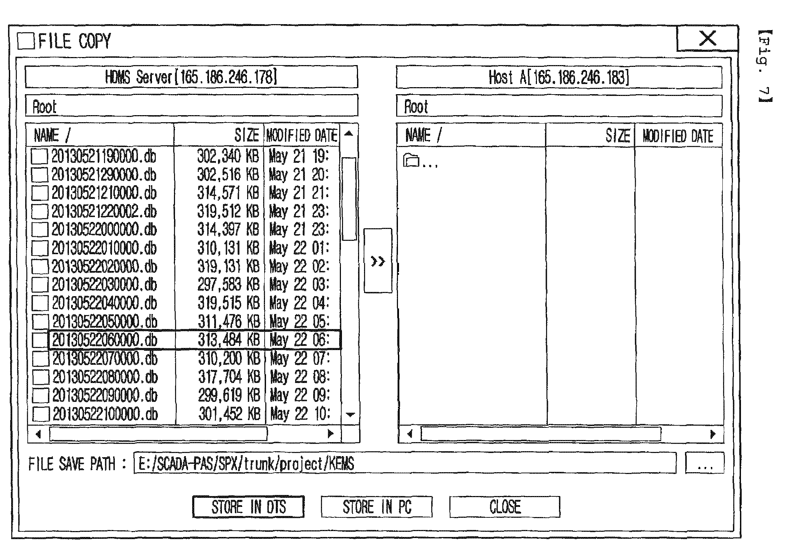

When a condition for the retrieval section is input on the above-described training screen is input and a retrieval command is performed with an input retrieval condition, a list of data corresponding to the retrieval condition is displayed as shown in Fig. 7.

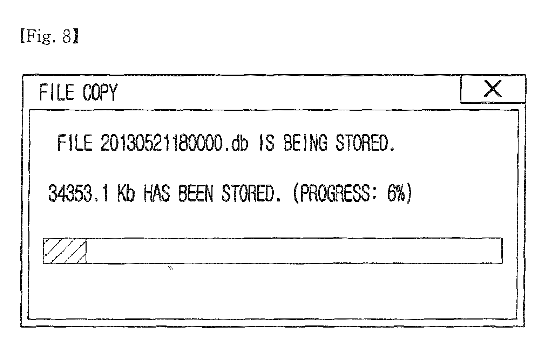

In this case, when the menu ">>", "Store in DTS" or "Store in PC" is selected after a specific file is selected from the list of data displayed, a selected file is stored in the DTS database 132 as shown in Fig. 8.

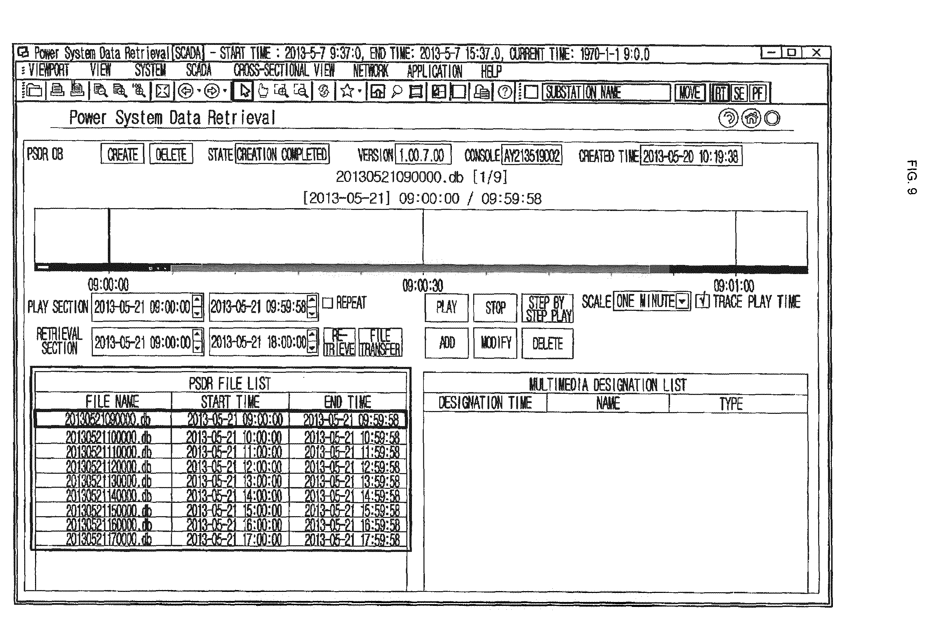

A file corresponding to a retrieval condition set for the retrieval condition item may be displayed on the lower screen (PSDR file list screen) of a corresponding item as shown in Fig. 9.

In addition, when any one of files displayed on the screen is selected, a selected file may be displayed on a multimedia designation list screen.

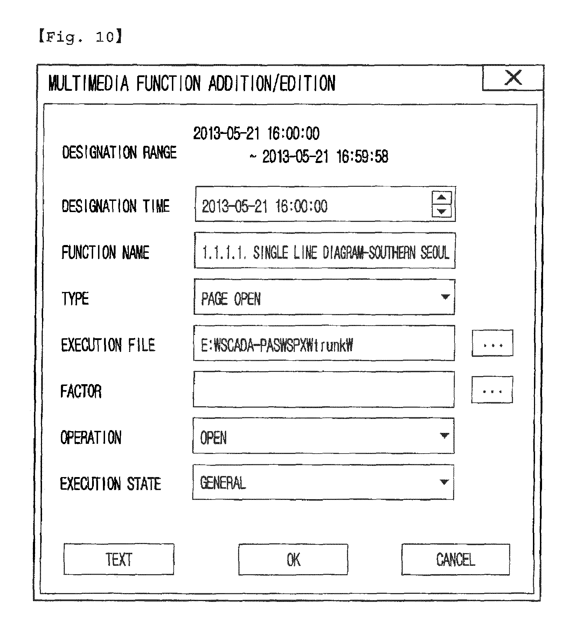

In addition, as shown in Fig. 10, it is possible to input additional information on the additional event by setting a designation time, a function name, a type, an execution file (which means the selected file), and an factor for the selected file.

A multimedia function addition/edition screen as shown in Fig. 10 means an additional event setting screen for executing a Southern Seoul single line diagram file when it comes to 16:00, May 21, 2013, and in this case, an execution file or factor for executing the Southern Seoul single line diagram file may be input as additional information.

Accordingly, when it comes to 16:00, May 21, 2013 while the set training simulation is performed, the Southern Seoul single line diagram file is displayed on a screen along with operation record data used for performing the training simulation.

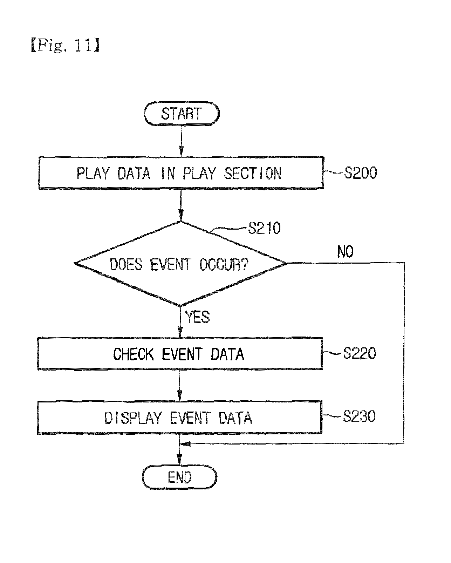

Fig. 11 is a flow chart for explaining, step by step, a method of playing the operation record of an EMS according to an embodiment.

Firstly, the dispatcher training system 130 uses operation record data on a preset play section to perform training simulation in step S200.

That is, the dispatcher training system 130 plays operation record data corresponding to a preset play section.

Then, the dispatcher training system 130 determines whether a preset event occurs in step S210. The event means an additional event set through the processes as shown in Fig. 4 and may include an accident event that various facilities may have.

When the event occurs, the dispatcher training system 130 checks an execution file designated to correspond to the event that has occurred, in step S220.

Then, the dispatcher training system 130 displays a checked execution file in step S230.

When the event that has occurred is an accident event, the dispatcher training system 130 temporarily stops the training simulation so that it is easy to check the accident event that has occurred.

That is, an embodiment may designate any condition (a designation time, an execution file, or corresponding data when an execution file receives a specific parameter) designated by a dispatcher and may execute a corresponding file along with the playing of operation record data according to a designated condition.

For example, when training a dispatcher that an alarm rings at 10 AM, it is possible to provide an alarm screen when it comes to 10 AM during the playing of operation history data. In this case, the 10 AM may be a designation time for any condition and the alarm screen may be an execution file for any condition.

As another example, when the shift of the dispatcher is eleven o'clock, the shit of the dispatcher is set as the designation time, details to be exchanged when the shift is performed are stored as a text file, and thus the text file is automatically executed when it comes to eleven o'clock that is the shift of the dispatcher.

Also, as another example, weather information on a specific region is acquired and stored with a network camera, and when a time for the playing of a stored file arrives, it is possible to play the file by executing a video play program (such as GOM Player or Windows Media Player).

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of playing an operation record of an energy management system (EMS), the method comprising:
setting a play section;
acquiring operation record data corresponding to a set play section;
playing acquired operation record data;
determining whether an additional event occurs during the playing of the operation record data;
checking an execution file corresponding to the additional event when it is determined that the additional event occurs; and
playing a checked execution file along with the operation record data.

2. The method according to claim 1, further comprising setting an additional event to occur during the playing of the operation record data,
wherein the setting of the additional event comprises:
designating the occurrence time of an additional event and
setting an execution time to be executed at a designated occurrence time.

3. The method according to claim 1 or claim 2, wherein the additional event is an event providing a notice that an alarm rings, and
the execution file comprises a notice screen for providing a notice that the alarm rings.

4. The method according to any one of claim 1 to 3, wherein the additional event is an event providing a notice of information on the shift of a dispatcher, and
the execution file comprises a text file that comprises details to be exchanged when the shift of the dispatcher is performed.

5. The method according to any one of claim 1 to 4, wherein the additional event is an event providing a notice of weather information on a specific region, and
the execution file comprises a video file for providing a notice of the weather information on the specific region.

6. The method according to any one of claim 1 to 5, wherein the additional event is an event for displaying a single line diagram screen of a specific region, and
the execution file comprises a single line diagram file for displaying a single line diagram screen of the specific region.

7. The method according to any one of claim 1 to 6, further comprising temporarily stopping playing the operation record data when an accident event occurs during the playing of the operation record data.

8. The method according to claim 7, further comprising displaying information on the accident event when the playing of the operation recording data is temporarily stopped.
